# EUROPEAN PATENT SPECIFICATION

(11) **EP 2 983 159 B1**
(45) Date of publication and mention of the grant of the patent: **15.08.2018**
(21) Application number: 13880737.5
(22) Date of filing: 02.04.2013
(51) Int. Cl.: G09G 3/02, B60K 35/00, G02B 26/10, G02B 27/18, G02B 26/08, G02B 27/01

(54) **LIGHT-SOURCE UNIT AND PROJECTION DEVICE**
LICHTQUELLENEINHEIT UND PROJEKTIONSVORRICHTUNG
UNITE DE SOURCE DE LUMIERE ET DISPOSITIF DE PROJECTION

(43) Date of publication of application: 10.02.2016
(73) Proprietor: Pioneer Corporation, Tokyo 113-0021 (JP)
(72) Inventor: FUKUDA, Shinnosuke, Kawagoe-shi, Saitama 350-8555 (JP)
(74) Representative: Viering, Jentschura & Partner mbB Patent- und Rechtsanwälte
(86) International application number: PCT/JP2013/060029
(87) International publication number: WO 2014/162500

(56) References cited:
- WO-A1-2013/035142
- JP-A- 2002 123 242
- JP-A- 2008 015 390
- JP-A- 2008 015 390
- JP-A- 2008 070 649
- JP-A- 2010 010 926
- JP-A- 2010 113 323
- US-A1- 2009 322 968

## Description

### TECHNICAL FIELD

The present invention relates to a technical field of detecting optical axis deviation.

### BACKGROUND TECHNIQUE

The technique of this kind is proposed in Patent Reference 1, for example. Patent Reference 1 discloses technique of letting color lasers subsequent to a scanning mirror emit lights one by one to measure and correct the deviation amount between the laser beams based on the difference of the timing of receiving the lights .

### PRECEDING TECHNICAL REFERENCE

### PATENT REFERENCE

Patent Reference 1: Japanese Patent Application Laid-open under No. 2010-20087

### SUMMARY OF THE INVENTION

### PROBLEM TO BE SOLVED BY THE INVENTION

However, vibration is applied to a device installed in a vehicle, and the detection accuracy of the optical axis deviation is deteriorated while such vibration is applied. Specifically, in case of detecting the optical axis deviation for the laser of each color, since the light-emitting timing of each laser is different from each other, the detection accuracy of the optical axis deviation is deteriorated while the vibration is applied to the device.

The above is an example of the problem to be solved by the invention. It is an object of the present invention to provide a light source unit capable of appropriately suppressing the deterioration of the detection accuracy of the optical axis deviation due to vibration.

### MEANS FOR SOLVING THE PROBLEM

According to the invention described in claims, a light source unit which synthesizes and emits plural light beams of different color includes : a detection means which detects an optical axis deviation of the plural light beams; and a control means which controls the detection means, wherein the control means makes the detection means detect the optical axis deviation based on a state of vibration applied to the light source unit.

According to the invention described in claims, a projection device which is installed in a vehicle and which generates a display image by plural beams of different color includes: a detection means which detects an optical axis deviation of the plural light beams; and a control means which controls the detection means, wherein the control means makes the detection means detect the optical axis deviation based on a state of vibration applied to the projection device.

### BRIEF DESCRIPTION OF THE DRAWINGS

FIG. 1 illustrates a configuration of a projection device according to an embodiment.
FIG. 2 is illustrates a specific example of a light receiving unit.
FIG. 3 is a diagram for specifically explaining CONDITION-3.
FIG. 4 illustrates a processing flow according to the embodiment.

### DETAILED DESCRIPTION OF THE PREFERRED EMBODIMENTS

According to one aspect of the present invention, there is provided a light source unit which synthesizes and emits plural light beams of different color, including: a detection means which detects an optical axis deviation of the plural light beams; and a control means which controls the detection means, wherein the control means makes the detection means detect the optical axis deviation based on a state of vibration applied to the light source unit.

In the above-described light source unit, the control means permits or inhibits the detection of the optical axis deviation by the detection means in accordance with the state of the vibration applied to the light source unit. For example, the control means permits the detection of the optical axis deviation when the harmful vibration for the detection of the optical axis deviation is not occurring, and inhibits the detection of the optical axis deviation when the harmful vibration for the detection of the optical axis deviation is occurring. Thus, it is possible to appropriately suppress the deterioration of the detection accuracy of the optical axis deviation due to the vibration, and the detection accuracy of the optical axis deviation can be ensured.

One mode of the above-described light source unit further includes a vibration detection means which detects the state of the vibration applied to the light source unit, wherein the control means makes the detection means detect the optical axis deviation when an intensity of the vibration detected by the vibration detection means is equal to or smaller than a predetermined value and/or a frequency component of the vibration detected by the vibration detection means is out of a predetermined range. In this mode, the control means determines that the harmful vibration for the detection of the optical axis deviation is not occurring and permits the detection of the optical axis deviation when the intensity of the vibration is equal to or smaller than the predetermined value and/or the frequency component of the vibration is out of the predetermined range.

According to another aspect of the present invention, there is provided a projection device which is installed in a vehicle and which generates a display image by plural beams of different color, including: a detection means which detects an optical axis deviation of the plural light beams; and a control means which controls the detection means, wherein the control means makes the detection means detect the optical axis deviation based on a state of vibration applied to the projection device.

By the above-described projection device, it is possible to appropriately suppress the deterioration of the detection accuracy of the optical axis deviation due to the vibration, and the detection accuracy of the optical axis deviation can be ensured.

In one mode of the above-described projection device, the control means makes the detection means detect the optical axis deviation when a driving state of the vehicle satisfies a predetermined condition. In this mode, the control means can determine whether or not the harmful vibration for the detection of the optical axis deviation is occurring, based on the driving state of the vehicle.

In another mode of the above-described projection device, the control means makes the detection means detect the optical axis deviation when an engine of the vehicle is stopped. In this mode, the control means determines that the harmful vibration for the detection of the optical axis deviation is not occurring and permits the detection of the optical axis deviation when the engine is stopped.

In still another mode of the above-described projection device, the control means makes the detection means detect the optical axis deviation when a travelling speed of the vehicle is equal to or smaller than a predetermined value. In this mode, the control means determines that the harmful vibration for the detection of the optical axis deviation is not occurring and permits the detection of the optical axis deviation when the travelling speed of the vehicle is equal to or smaller than the predetermined value.

### EMBODIMENTS

A preferred embodiment of the present invention will be described below with reference to the attached drawings.

### [Device Configuration]

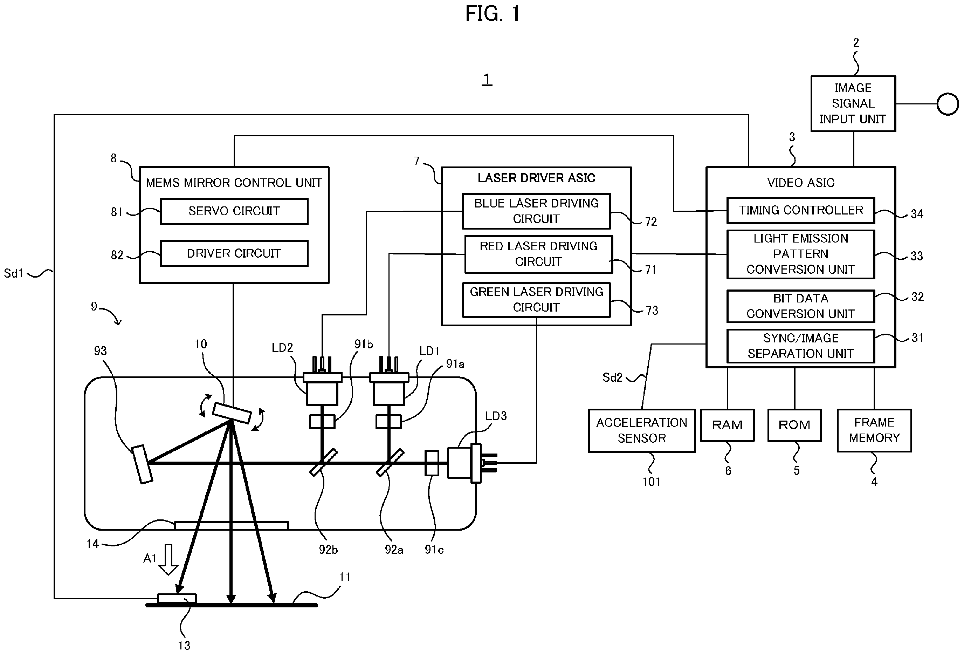

FIG. 1 illustrates a configuration of a projection device 1 according to the embodiment. As shown in FIG. 1, the projection device 1 according to the embodiment mainly includes an image signal input unit 2, a video ASIC 3, a frame memory 4, a ROM 5, a RAM 6, a laser driver ASIC 7, a MEMS mirror control unit 8, a laser light source unit 9, a diffusion plate 11, a light receiving unit 13 and an acceleration sensor 101.

For example, the projection device 1 is installed and used in a vehicle. In one example, the projection device 1 is applied to a head-up display which makes a user visually recognize images as virtual images from the position of the eyes of the user (eye point). It is noted that the laser light source unit 9 in FIG. 1 is shown in a manner cut at the plane along the advancing direction of the light.

The image signal input unit 2 receives an image signal inputted from external and outputs it to the video ASIC 3. The video ASIC 3 is a block for controlling the laser driver ASIC 7 and the MEMS mirror control unit 8 based on the image signal inputted from the image signal input unit 2 and the scan position information inputted from the MEMS mirror 10, and is formed as an ASIC (Application Specific Integrated Circuit). The video ASIC 3 includes a synchronization/image separation unit 31, a bit data conversion unit 32, a light emission pattern conversion unit 33 and a timing controller 34.

The synchronization/image separation unit 31 separates the image signal inputted from the image signal input unit 2 into image data to be displayed on an image display unit and a synchronous signal, and writes the image data into the frame memory 4. The bit data conversion unit 32 reads out the image data written in the frame memory 4 to convert it to the bit data. The light emission pattern conversion unit 33 converts the bit data converted by the bit data conversion unit 32 to a signal indicating a light emission pattern of each laser. The timing controller 34 controls the operation timing of the synchronization/image separation unit 31 and the bit data conversion unit 32. Also, the timing controller 34 controls the operation timing of the MEMS mirror control unit 8 described later.

Into the frame memory 4, the image data separated by the synchronization/image separation unit 31 is written. The ROM 5 stores control programs and data with which the video ASIC 3 operates . Various data are read from and written into the RAM 6, which serves as a work memory for the operation of the video ASIC 3.

The laser driver ASIC 7 is a block for generating signals to drive the laser diodes (LD) provided in the laser light source unit 9 described later, and is formed as an ASIC. The laser driver ASIC 7 includes a red laser driving circuit 71, a blue laser driving circuit 72 and a green laser driving circuit 73. The red laser driving circuit 71 drives the red laser LD1 based on the signal outputted by the light emission pattern conversion unit 33. The blue laser driving circuit 72 drives the blue laser LD2 based on the signal outputted by the light emission pattern conversion unit 33. The green laser driving circuit 73 drives the green laser LD3 based on the signal outputted by the light emission pattern conversion unit 33.

The MEMS (Micro Electro Mechanical Systems) mirror control unit 8 controls the MEMS mirror 10 based on the signal outputted by the timing controller 34. The MEMS mirror control unit 8 includes a servo circuit 81 and a driver circuit 82. The servo circuit 81 controls the operation of the MEMS mirror 10 based on the signal from the timing controller 34. The driver circuit 82 amplifies the control signal of the MEMS mirror 10 outputted by the servo circuit 81 to a predetermined level, and then outputs it.

The laser light source unit 9 mainly functions to emit the laser light based on the driving signals outputted by the laser driver ASIC 7. Specifically, the laser light source unit 9 includes the red laser LD1, the blue laser LD2, the green laser LD3, collimator lenses 91a, 91b, 91c, dichroic mirrors 92a, 92b, a mirror 93, the MEMS mirror 10 and a transmission window 14.

The red laser LD1 emits the red laser light, the blue laser LD2 emits the blue laser light, and the green laser LD3 emits the green laser light. In the following description, the red laser LD1, the blue laser LD2 and the green laser LD3 are simply expressed as "the laser LD" when they are not distinguished from each other, and the red laser light, the blue laser light and the green laser light are simply expressed as "the laser light" when they are not distinguished from each other. Also, in this specification, the laser light will be suitably expressed as "beam".

The collimator lenses 91a, 91b, 91c change the red laser light, the blue laser light and the green laser light to the parallel lights, respectively. The dichroic mirror 92a reflects the red laser light passed through the collimator lens 91a, and transmits the green laser light passed through the collimator lens 91c. The dichroic mirror 92b transmits the red laser light and the green laser light from the dichroic 92a, and reflects the blue laser light passed through the collimator lens 91b. The mirror 93 reflects the laser lights outputted from the dichroic mirror 92b toward the MEMS mirror 10.

The MEMS mirror 10 reflects the beam (the laser light) reflected by the mirror 93 toward the diffusion plate 11 through the transmission window 14. Specifically, by the control of the MEMS mirror control unit 8, the MEMS mirror 10 scans the diffusion plate 11 with the beam so as to display the image inputted to the image signal input unit 2, and outputs the scanning position information (e.g., information such as the angle of the mirror) at that time to the video ASIC 3.

The diffusion plate 11, on which the beam reflected by the MEMS mirror 10 is incident via the transmission window 14, functions as a screen forming an intermediate image. For example, an EPE (Exit-Pupil Expander) may be used as the diffusion plate 11. On the diffusion plate 11, the light receiving unit 13 is provided. For example, the light receiving unit 13 is provided outside the area corresponding to the image displaying area on the diffusion plate 11 (the area on which the image light of the image to be displayed is irradiated).

On the light receiving unit 13, the beam reflected by the MEMS mirror 10 is incident. The light receiving unit 13 is a photoelectric conversion element (e.g., a quadripartite light receiving element), and outputs a light receiving signal Sd1 corresponding to the light receiving position of the beam to the video ASIC 3.

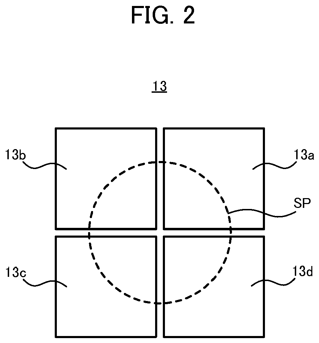

Here, a concrete example of the light receiving unit 13 will be described with reference to FIG. 2. FIG. 2 is a view of the light receiving unit 13 observed from the direction of the arrow A1 in FIG. 1. As shown in FIG. 2, the light receiving unit 13 includes four light receiving elements 13a to 13d, and the spot SP corresponding to the beam reflected by the MEMS mirror 10 is formed on the light receiving unit 13. Each of the light receiving elements 13a to 13d outputs the signal corresponding to the area in which the beam is irradiated. The light receiving unit 13 outputs the value obtained by subtracting the sum of the output values of the light receiving elements 13b and 13d from the sum of the output values of the light receiving elements 13a and 13c, as a X-deviation signal indicating the optical axis deviation in X direction (left-right direction) . Also, the light receiving unit 13 outputs the value obtained by subtracting the sum of the output values of the light receiving elements 13c and 13d from the sum of the output values of the light receiving elements 13a and 13b, as a Y-deviation signal indicating the optical axis deviation in Y direction (up-down direction). The light receiving unit 13 outputs the signals, including the X-deviation signal and the Y-deviation signal, to the video ASIC 3 as the above-described light receiving signal Sd1.

Returning to FIG. 1, the video ASIC 3 detects the optical axis deviation of the red laser LD1, the blue laser LD2 and the green laser LD3 based on the light receiving signal Sd1 from the light receiving unit 13. In this case, the video ASIC 3 detects the optical axis deviation for each laser LD based on the light receiving signal Sd1 for each of the red laser light, the blue laser light and the green laser light obtained when each the red laser LD1, the blue laser LD2 and the green laser LD3 individually emits the light. Then, the video ASIC 3 executes the processing to correct the optical axis deviation based on the optical axis deviation thus detected. For example, the video ASIC 3 corrects the optical axis deviation by controlling the light emission timing of the laser light (i.e., the modulation timing of the laser LD corresponding to the movement of the MEMS mirror 10).

The acceleration sensor 101 detects the acceleration, and outputs the detection signal Sd2 corresponding to the detected acceleration to the video ASIC 3. The acceleration detected by the acceleration sensor 101 corresponds to the vibration applied to the projection device 1, i.e., the vibration applied to the laser light source unit 9.

Thus, the light receiving unit 13 corresponds to an example of "the detection means" in the present invention, the video ASIC 3 corresponds to an example of "the control means" in the present invention, and the acceleration sensor corresponds to an example of "the vibration detection means" in the present invention. Also, the combination of the laser light source unit 9, the video ASIC 3, the light receiving unit 13 and the acceleration sensor 101 corresponds to an example of "the light source unit".

### [Control Method]

Next, the description will be given of the control method performed by the video ASIC 3 in this embodiment. In this embodiment, the video ASIC 3 controls the detection of the optical axis deviation by using the light receiving unit 13 in accordance with the state of the vibration applied to the projection device 1. It is noted that the vibration applied to the projection device 1 is the vibration applied to the laser light source unit 9 because, when the vibration is applied to the projection device 1, naturally the vibration is also applied to the constitutional components of the projection device 1. Specifically, the video ASIC 3 permits or inhibits the detection of the optical axis deviation in accordance with the state of the vibration applied to the projection device 1. The reason is as follows.

When the projection device 1 is installed and used in a vehicle, vibration is applied to the projection device 1. In a state where the vibration is applied to the projection device 1, the detection accuracy of the optical axis deviation tends to be deteriorated. Specifically, since the optical axis deviation is detected for each of the laser LDs by making each of the laser LDs emits the light individually as described above, the light emission timings of the laser LDs are different. Therefore, the detection accuracy of the optical axis deviation tends to be deteriorated in the state where the vibration is applied to the projection device 1. Namely, there is a possibility of the erroneous detection of the optical axis deviation.

Accordingly, in this embodiment, in view of ensuring the detection accuracy of the optical axis deviation, the optical axis deviation is detected by using the light receiving unit 13 only in the state where harmful vibration for the detection of the optical axis deviation is not occurring, i.e., where vibration causing the erroneous detection of the optical axis deviation is not occurring. Specifically, the video ASIC 3 determines that the harmful vibration for the detection of the optical axis deviation is not occurring when one of the following CONDITION-1 to CONDITION-3 is satisfied, and permits the detection of the optical axis deviation. On the contrary, when none of CONDITION-1 to CONDITION-3 is satisfied, the video ASIC 3 determines that the harmful vibration for the detection of the optical axis deviation is occurring, and inhibits the detection of the optical axis deviation.
- CONDITION-1: The engine of the vehicle is stopped.
- CONDITION-2 : The amount of the vibration applied to the projection device 1 is equal to or smaller than a predetermined value.
- CONDITION-3: The frequency component of the vibration applied to the projection device 1 is out of a predetermined range.

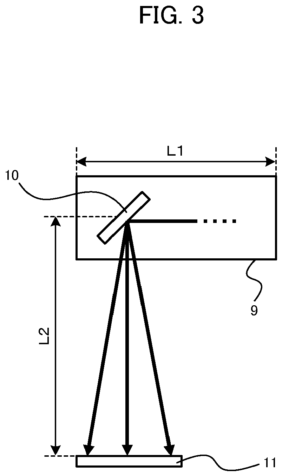

Here, CONDITION-3 will be described in detail. As "the predetermined range" in CONDITION-3, the frequency range around the resonance frequency of the MEMS mirror 10 is used. This is because, when the frequency of the vibration applied to the projection device 1 is close to the resonance frequency of the MEMS mirror 10, the swing of the MEMS mirror 10 becomes large, and it becomes highly possible that the detection accuracy of the optical axis deviation is deteriorated. It is noted that this results from the fact that the light receiving unit 13 is provided at the subsequent stage of the MEMS mirror 10. Further, as "the predetermined range" in CONDITION-3, the frequency range around the primary resonance frequency between the MEMS mirror 10 and the diffusion plate 11 in the casing is used. The reason for this will be described with reference to FIG. 3.

FIG. 3 illustrates the laser light source unit 9 and the diffusion plate 11 in a simplified manner. As shown in FIG. 3, the projection device 1 is configured such that the distance L2 (e.g., 100mm) from the MEMS mirror 10 to the diffusion plate 11 is longer than the external dimension L (e.g., 30mm) of the laser light source unit 9. It means that the optical path from the MEMS mirror 10 to the diffusion plate 11 is the longest among the optical paths from the laser LD to the diffusion plate 11. Therefore, it is understood that the part from the MEMS mirror 10 to the diffusion plate 11 largely influences the detection accuracy of the optical axis deviation. Based on the above analysis, the frequency range around the primary resonance frequency between the MEMS mirror 10 and the diffusion plate 11 in the casing is used as "the predetermined range" in CONDITION-3. The reason why the primary resonance frequency is used is that the vibration of relatively low frequency tends to occur in the vehicle.

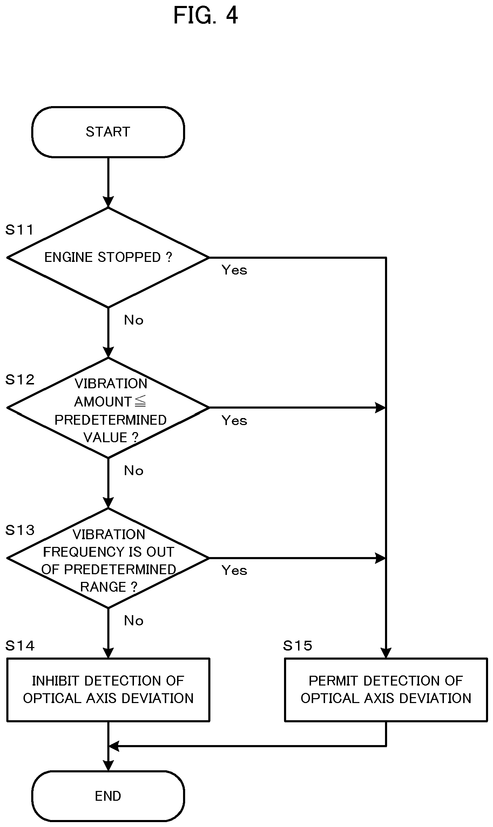

Next, the processing flow according to the embodiment will be described with reference to FIG. 4. This processing flow is repeatedly executed with a predetermined cycle by the video ASIC 3.

First, in step S11, the video ASIC 3 determines whether or not the engine of the vehicle is stopped. Namely, the video ASIC 3 determines whether or not CONDITION-1 described above is satisfied. For example, the video ASIC 3 executes this determination by detecting ON/OFF state of the ACC battery (the accessory battery) . In this example, the video ASIC 3 determines that the engine is stopped when the OFF state of the ACC battery is detected, and determines that the engine is not stopped when the ON state of the ACC battery is detected.

When the engine is stopped (step S11: Yes), i.e., when CONDITION-1 is satisfied, the processing goes to step S15. In this case, the video ASIC 3 determines that the harmful vibration for the detection of the optical axis deviation is not occurring, and permits the detection of the optical axis deviation (step S15) . Then, the processing ends.

On the contrary, when the engine is not stopped (step S11: No), i.e., when CONDITION-1 is not satisfied, the processing goes to step S12. In step S12, the video ASIC 3 determines whether or not the vibration amount (corresponding to the intensity of the vibration) applied to the projection device 1 is equal to or smaller than the predetermined value. Namely, the video ASIC 3 determines whether or not CONDITION-2 described above is satisfied. In this case, the video ASIC 3 uses the acceleration (corresponding to the detection signal Sd2) detected by the acceleration sensor 101 as the vibration amount. Also, the video ASIC 3 uses, as "the predetermined value" in the determination, the vibration amount over which the detection accuracy of the optical axis deviation is deteriorated.

When the vibration amount is equal to or smaller than the predetermined value (step S12: Yes), i.e., when CONDITION-2 is satisfied, the processing goes to step S15. In this case, the video ASIC 3 determines that the harmful vibration for the detection of the optical axis deviation is not occurring, and permits the detection of the optical axis deviation (step S15). Then, the processing ends.

On the contrary, when the vibration amount is larger than the predetermined value (step S12: No), i.e., when CONDITION-2 is not satisfied, the processing goes to step S13. In step S13, the video ASIC 3 determines whether or not the frequency component of the vibration applied to the projection device 1 is out of the predetermined range. Namely, the video ASIC 3 determines whether or not CONDITION-3 described above is satisfied. In this case, the video ASIC 3 uses, as "the predetermined range" for the determination, the frequency range near the resonance frequency of the MEMS mirror 10 and the frequency range near the primary resonance frequency between the MEMS mirror 10 and the diffusion plate 11 in the casing. The predetermined range is set in advance and is stored in a memory.

When the frequency component of the vibration is out of the predetermined range (step S13: Yes), i.e., when CONDITION-3 is satisfied, the processing goes to step S15. In this case, the video ASIC 3 determines that the harmful vibration for the detection of the optical axis deviation is not occurring, and permits the detection of the optical axis deviation (step S15). Then, the processing ends.

On the contrary, when the frequency component of the vibration is within the predetermined range (step S13: No), i.e., CONDITION-3 is not satisfied, the processing goes to step S14. In this case, since none of CONDITION-1 to CONDITION-3 is satisfied, the video ASIC determines that the harmful vibration for the detection of the optical axis deviation is occurring, and inhibits the detection of the optical axis deviation (step S14). Then, the processing ends.

According to the embodiment described above, the detection of the optical axis deviation can be appropriately implemented in the state where the harmful vibration for the detection of the optical axis deviation is not occurring, i.e., the vibration causing the erroneous detection of the optical axis deviation is not occurring. Therefore, it is possible to appropriately suppress the deterioration of the detection accuracy of the optical axis deviation due to the vibration, and the detection accuracy of the optical axis deviation can be ensured.

### [Modified Examples]

Preferred modified examples of the above-described embodiment will be described below. The following modified examples can be applied to the above-described embodiment in an arbitrary combination.

### (1st Modified Example)

In the above-described embodiment, the detection of the optical axis deviation is permitted when one of CONDITION-1 to CONDITION-3 is satisfied, and the detection of the optical axis deviation is inhibited when none of CONDITION-1 to CONDITION-3 is satisfied. In another example, only one of CONDITION-1 to CONDITION-3 may be used. For example, in case of only using CONDITION-1, the detection of the optical axis deviation is permitted when the engine is stopped, and the detection of the optical axis deviation is inhibited when the engine is not stopped. In case of only using CONDITION-2, the detection of the optical axis deviation is permitted when the vibration amount is equal to or smaller than the predetermined value, and the detection of the optical axis deviation is inhibited when the vibration amount is larger than the predetermined value. In case of only using CONDITION-3, the detection of the optical axis deviation is permitted when the frequency component of the vibration is out of the predetermined range, and the detection of the optical axis deviation is inhibited when the frequency component of the vibration is within the predetermined range.

In still another example, only two of CONDITION-1 to CONDITION-3 may be used. For example, in case of using only CONDITION-1 and CONDITION-2, the detection of the optical axis deviation is permitted when the engine is stopped or the vibration amount is equal to or smaller than the predetermined value, and the detection of the optical axis deviation is inhibited when the engine is not stopped and the vibration amount is larger than the predetermined value. In case of using only CONDITION-1 and CONDITION-3, the detection of the optical axis deviation is permitted when the engine is stopped or the frequency component of the vibration is out of the predetermined range, and the detection of the optical axis deviation is inhibited when the engine is not stopped and the frequency component of the vibration is within the predetermined range. In case of using only CONDITION-2 and CONDITION-3, the detection of the optical axis deviation is permitted when the vibration amount is equal to or smaller than the predetermined value or the frequency component of the vibration is out of the predetermined range, and the detection of the optical axis deviation is inhibited when the vibration amount is larger than the predetermined value and the frequency component of the vibration is within the predetermined range.

In still another example, the modified condition of CONDITION-2 and CONDITION-3 may be used. Specifically, the detection of the optical axis deviation is permitted when the vibration amount is equal to or smaller than the predetermined value and the frequency component of the vibration is out of the predetermined range, and the detection of the optical axis deviation is inhibited when the vibration amount is larger than the predetermined value or the frequency component of the vibration is within the predetermined range.

### (2nd Modified Example)

In the above-described embodiment, the condition that the engine is stopped is used as CONDITION-1. In another example, the condition that the travelling speed is equal to or smaller than a predetermined value may be used as CONDITION-1, instead of the condition that the engine is stopped. In this example, when the travelling speed is equal to or smaller than the predetermined value, it is determined that the harmful vibration for the detection of the optical axis deviation is not occurring, and the detection of the optical axis deviation is permitted. As the predetermined value for determining the travelling speed, a certain travelling speed over which the detection accuracy of the optical axis deviation is deteriorated with high possibility can be used.

In still another example, both the condition that the engine is stopped and the condition that the travelling speed is equal to or smaller than the predetermined value may be used as the condition for permitting the detection of the optical axis deviation. In this example, the detection of the optical axis deviation is permitted not only in the case that the engine is stopped, but also in the case that the travelling speed is equal to or smaller than the predetermined value even if the engine is not stopped.

### (3rd Modified Example)

In the above-described embodiment, the vibration is detected by the acceleration sensor 101 provided in the projection device 1. In another example, the acceleration sensor 101 is not provided in the projection device 1, and the vibration may be detected by an acceleration sensor provided on an external device of the projection device 1. For example, the projection device 1 is connected to a navigation device, and the vibration can be detected by obtaining the detection signal of the acceleration sensor provided in the navigation device.

### (4th Modified Example)

In the above-described embodiment, the light receiving unit 13 is arranged at the subsequent stage of the MEMS mirror 10. Specifically, the light receiving unit 13 is arranged on the diffusion plate 11 as shown in FIG. 1. In another example, the light receiving unit 13 may be arranged on the preceding stage of the MEMS mirror 10. In that case, the light receiving unit 13 maybe arranged inside the laser light source unit 9. For example, the light receiving unit 13 may be arranged on the optical path between the dichroic mirror 92b and the MEMS mirror 10.

### DESCRIPTION OF REFERENCE NUMBERS

- 1: Projection Device
- 3: Video ASIC
- 7: Laser Driver ASIC
- 8: MEMS Mirror Control Unit
- 9: Laser Light Source Unit
- 10: MEMS Mirror
- 11: Diffusion Plate
- 13: Light Receiving Unit
- 101: Acceleration Sensor
- LD1: Red Laser
- LD2: Blue Laser
- LD3: Green Laser

## Claims

1. A projection device (1) which generates a display image by plural beams of different color, comprising:
a detection means (13) which detects an optical axis deviation of the plural light beams from a desired axis for each beam of different color; vibration detection means (101) which obtains information on a vibration amount and/or vibration frequency applied to the projection device (1),
a control means (3) which is adapted to permit the detection means (13) to detect the optical axis deviation when the vibration amount is equal to or smaller than a pre-determined value or the frequency component of the vibration is out of a pre-determined range and the state of vibration is not harmful for the detection of the optical axis deviation and is adapted to inhibit the detection means to detect the optical axis deviation when the vibration amount is greater than a pre-determined value and the frequency component of the vibration is within a pre-determined range and the state of vibration is harmful, and
a correction means which corrects the optical axis deviation detected by the detection means (13).

2. The projection device (1) according to claim 1, wherein the control means (3) permits the detection means (13) to detect the optical axis deviation when an intensity of the vibration detected by the vibration detection means (101) is equal to or smaller than a predetermined value and/or a frequency component of the vibration detected by the vibration detection means (101) is out of a predetermined range.

3. The projection device (1) according to claim 1, wherein the control means (3) permits the detection means (13) to detect the optical axis deviation when a driving state of a vehicle on which the projection device (1) is installed satisfies a predetermined condition.

4. The projection device (1) according to claim 3, wherein the control means (3) permits the detection means (13) to detect the optical axis deviation when an engine of the vehicle is stopped.

5. The projection device (1) according to claims 3 or 4, wherein the control means (3) permits the detection means (13) to detect the optical axis deviation when a travelling speed of the vehicle is equal to or smaller than a predetermined value.

## Patentansprüche

1. Eine Projektionsvorrichtung (1), die durch mehrere Strahlen unterschiedlicher Farbe ein Anzeigebild erzeugt, aufweisend:
ein Erfassungsmittel (13), das eine Optische-Achse-Abweichung der mehreren Lichtstrahlen von einer gewünschten Achse für jeden Lichtstrahl unterschiedlicher Farbe erfasst;
ein Vibration-Erfassungsmittel (101), welches Informationen über einen Vibrationsbetrag und/oder eine Vibrationsfrequenz erhält, die/der auf die Projektionsvorrichtung (1) einwirken/einwirkt,
ein Steuerungsmittel (3), das angepasst ist, um dem Erfassungsmittel (13) zu erlauben, die Optische-Achse-Abweichung zu erfassen, wenn der Vibrationsbetrag gleich oder kleiner ist als ein vorbestimmter Wert oder die Frequenzkomponente der Vibration außerhalb eines vorbestimmten Bereichs ist und der Vibrationszustand für das Erfassen der Optische-Achse-Abweichung nicht schädlich ist, und das angepasst ist, um zu verhindern, dass das Erfassungsmittel die Optische-Achse-Abweichung erfasst, wenn der Vibrationsbetrag größer ist als ein vorbestimmter Wert und die Frequenzkomponente der Vibration innerhalb eines vorbestimmten Bereichs liegt und der Vibrationszustand schädlich ist, und
ein Korrekturmittel, welches die von dem Erfassungsmittel (13) erfasste Optische-Achse-Abweichung korrigiert.

2. Die Projektionsvorrichtung (1) gemäß Anspruch 1,
wobei das Steuerungsmittel (3) dem Erfassungsmittel (13) erlaubt, die Optische-Achse-Abweichung zu erfassen, wenn eine Intensität der von dem Vibration-Erfassungsmittel (101) erfassten Vibration gleich oder kleiner ist als ein vorbestimmter Wert und/oder eine Frequenzkomponente der von dem Vibration-Erfassungsmittel (101) erfassten Vibration außerhalb eines vorbestimmten Bereichs ist.

3. Die Projektionsvorrichtung (1) gemäß Anspruch 1, wobei
das Steuerungsmittel (3) dem Erfassungsmittel (13) erlaubt, die Optische-Achse-Abweichung zu erfassen, wenn ein Antriebszustand eines Fahrzeugs, an dem die Projektionsvorrichtung (1) installiert ist, eine vorbestimmte Bedingung erfüllt.

4. Die Projektionsvorrichtung (1) gemäß Anspruch 3, wobei
das Steuerungsmittel (3) dem Erfassungsmittel (13) erlaubt, die Optische-Achse-Abweichung zu erfassen, wenn ein Motor des Fahrzeugs abgestellt ist.

5. Die Projektionsvorrichtung (1) gemäß Anspruch 3 oder 4,
wobei das Steuerungsmittel (3) dem Erfassungsmittel (13) erlaubt, die Optische-Achse-Abweichung zu erfassen, wenn eine Bewegungsgeschwindigkeit des Fahrzeugs gleich oder kleiner als ein vorbestimmter Wert ist.

## Revendications

1. Dispositif de projection (1) qui génère une image d'affichage par le biais de plusieurs faisceaux de couleur différente, comprenant :
un moyen de détection (13) qui détecte un écart d'axe optique de la pluralité de faisceaux lumineux par rapport à un axe souhaité pour chaque faisceau de couleur différente ;
un moyen de détection de vibrations (101) qui obtient des informations sur une quantité de vibrations et/ou une fréquence de vibrations appliquées au dispositif de projection (1) ;
un moyen de commande (3) qui est apte à permettre au moyen de détection (13) de détecter l'écart d'axe optique lorsque la quantité de vibrations est égale ou inférieure à une valeur prédéterminée ou lorsque la composante de fréquence des vibrations est hors d'une plage prédéterminée et que l'état de vibrations n'est pas nuisible à la détection de l'écart d'axe optique, et qui est apte à empêcher le moyen de détection de détecter l'écart d'axe optique lorsque la quantité de vibrations est supérieure à une valeur prédéterminée, que la composante de fréquence des vibrations est située dans une plage prédéterminée, et que l'état de vibrations est nuisible ; et
un moyen de correction qui corrige l'écart d'axe optique détecté par le moyen de détection (13).

2. Dispositif de projection (1) selon la revendication 1,
dans lequel le moyen de commande (3) permet au moyen de détection (13) de détecter l'écart d'axe optique lorsqu'une intensité des vibrations détectées par le moyen de détection de vibrations (101) est égale ou inférieure à une valeur prédéterminée, et/ou lorsqu'une composante de fréquence des vibrations détectées par le moyen de détection de vibrations (101) est hors d'une plage prédéterminée.

3. Dispositif de projection (1) selon la revendication 1, dans lequel le moyen de commande (3) permet au moyen de détection (13) de détecter l'écart d'axe optique lorsqu'un état de conduite d'un véhicule sur lequel est installé le dispositif de projection (1) satisfait à une condition prédéterminée.

4. Dispositif de projection (1) selon la revendication 3, dans lequel le moyen de commande (3) permet au moyen de détection (13) de détecter l'écart d'axe optique lorsqu'un moteur du véhicule est arrêté.

5. Dispositif de projection (1) selon la revendication 3 ou 4, dans lequel le moyen de commande (3) permet au moyen de détection (13) de détecter l'écart d'axe optique lorsqu'une vitesse de déplacement du véhicule est égale ou inférieure à une valeur prédéterminée.
